# EUROPEAN PATENT SPECIFICATION

(11) **EP 3 428 743 B1**
(45) Date of publication and mention of the grant of the patent: **04.11.2020**
(21) Application number: 17187585.9
(22) Date of filing: 23.08.2017
(51) Int. Cl.: G04G 17/04, G04G 21/04, G04G 99/00, H04B 5/00, G06F 3/041, G06F 1/16

(54) **WEARABLE DEVICE AND OPERATING METHOD THEREOF**
WEARABLE-VORRICHTUNG UND BETRIEBSVERFAHREN DAFÜR
DISPOSITIF PORTABLE ET PROCÉDÉ DE FONCTIONNEMENT COMMANDE CORRESPONDANT

(30) Priority: 11.07.2017 TW 106123232
(43) Date of publication of application: 16.01.2019
(73) Proprietor: Princo Corp., Hsinchu 300 (TW)
(72) Inventor: Chiu, Pei-liang, Hsinchu 300 (TW)
(74) Representative: Petraz, Gilberto Luigi

(56) References cited:
- EP-A1- 2 980 741
- WO-A1-2017/016872
- US-A1- 2010 045 608
- US-A1- 2011 032 193
- US-A1- 2014 080 550
- US-A1- 2016 261 026
- US-A1- 2016 328 043
- US-B1- 9 178 572

## Description

### TECHNICAL FIELD OF THE DISCLOSURE

The present disclosure relates to an electronic device, and more particularly to a wearable device and an operating method thereof.

### BACKGROUND OF THE DISCLOSURE

Currently, smartphones can carry out mobile payment using radio frequency identification (RFID) or near field communication (NFC) technologies. However, there are some drawbacks in paying money using existing smartphones. When RFID/NFC function is switched on, there is a high risk of skimming or eavesdropping if the magnitude of emitted electromagnetic signals is too high. Communication with an RF tag or reader may be impossible if the magnitude of emitted electromagnetic signals is too low.

The existing electronic devices equipped with the RFID/NFC function lack ability to adjust the magnitude of the electromagnetic signals. In addition, if the RFID/NFC function is switched on for a long time, skimming or eavesdropping may easily occur and cause security problems, and also dramatically affect battery level. This reduces usage time of the electronic device and service life of its battery.

Consequently, there is a need to solve the above-mentioned problems in the prior art. EP 2980741A1, US 2016/261026A1, US 9178572B1, US 2016/328043A1, US 2014/080550A1, WO 2017/016872A1, US 2011/032193 A1 and US 2010/045608 A1 are related arts in this field.

### SUMMARY OF THE DISCLOSURE

An objective of the present disclosure is to provide a wearable device and a method for operating the wearable device, which can solve the problems in the prior art The invention is defined by the appended independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

An aspect of the present disclosure provides a wearable device, including: a cover having at least one wall that defines an accommodating space; a short distance communication module disposed in the accommodating space, the short distance communication module including a coil and an activator electrically connected to the coil and configured to apply an electric current varying with time, to the coil, to make the coil generate electromagnetic signals for communication with an external device; a conductive film disposed on a surface of the wall of the cover, the conductive film including a plurality of conductive wires that are interlaced with each other to construct a plurality of conductive units; a touch detecting unit electrically connected to the conductive film and configured to detect an integral effect of electrical signal changes of all of the conductive units in the conductive film to generate a detecting signal; and a controller electrically connected to the touch detecting unit and the short distance communication module, and according to the detecting signal generated by the touch detecting unit, the controller configured to control or adjust the electromagnetic signals generated by the coil of the short distance communication module.

Another aspect of the present disclosure provides a wearable device, including: a cover having at least one wall that defines an accommodating space; a short distance communication module disposed in the accommodating space, the short distance communication module including a coil and an activator electrically connected to the coil and configured to apply an electric current varying with time, to the coil, to make the coil generate electromagnetic signals for communication with an external device; at least one detector disposed in the accommodating space and configured to detect a displacement, an angular displacement, and/or a periodic displacement or angular displacement of the detector in a three-dimensional space to generate a detecting signal; a controller electrically connected to the at least one detector and the short distance communication module, and according to the detecting signal generated by the at least one detector, the controller configured to control or adjust the electromagnetic signals generated by the coil of the short distance communication module.

Still another aspect of the present disclosure provides a method for operating a wearable device, the wearable device including a cover having at least one wall that defines an accommodating space, the wearable device further including a conductive film disposed on a surface of the wall of the cover, and a short distance communication module, a touch detecting unit, and a controller that are disposed in the accommodating space, the conductive film including a plurality of conductive wires that are interlaced with each other to construct a plurality of conductive units, the short distance communication module including a coil and an activator electrically connected to the coil, the touch detecting unit electrically connected to the conductive film, the controller electrically connected to the touch detecting unit and the short distance communication module, the method including: utilizing the activator of the short distance communication module to apply an electric current varying with time, to the coil, to make the coil generate electromagnetic signals for communication with an external device; utilizing the touch detecting unit to detect an integral effect of electrical signal changes of all of the conductive units in the conductive film to generate a detecting signal; and according to the detecting signal generated by the touch detecting unit, utilizing the controller to control or adjust the electromagnetic signals generated by the coil of the short distance communication module.

Yet another aspect of the present disclosure provides a method for operating a wearable device, the wearable device including a cover having at least one wall that defines an accommodating space, the wearable device further including a short distance communication module, at least one detector, and a controller that are disposed in the accommodating space, the short distance communication module including a coil and an activator electrically connected to the coil, the controller electrically connected to the at least one detector and the short distance communication module, the method including: utilizing the activator of the short distance communication module to apply an electric current varying with time, to the coil, to make the coil generate electromagnetic signals for communication with an external device; utilizing the at least one detector to detect a displacement, an angular displacement, and/or a periodic displacement or angular displacement of the at least one detector in a three-dimensional space to generate a detecting signal; and according to the detecting signal generated by the at least one detector, utilizing the controller to control or adjust the electromagnetic signals generated by the coil of the short distance communication module.

In the present disclosure, it is convenient for a user to perform user operations to control the electromagnetic signals emitted by the coil of the short distance communication module (e.g., a RFID/NFC module) of the wearable device (e.g., a wristwatch) to enable, disable, or adjust the electromagnetic signals. Therefore, the present disclosure can reduce unnecessary power loss of the short distance communication module, increase usage time of the wearable device, and improve service life of a battery of the wearable device. Meanwhile, it is convenient for the user to shut down the short distance communication module to reduce the possibility of skimming or eavesdropping, thereby increasing the security.

### BRIEF DESCRIPTION OF THE DRAWINGS

FIG. 1 shows a top view of a wristwatch in accordance with an embodiment of the present disclosure.
FIG. 2 shows an exploded view of the wristwatch shown in FIG. 1.
FIG. 3 is a schematic diagram showing interactions between a short distance communication module and a functional module in accordance with an embodiment of the present disclosure.
FIG. 4 is a schematic diagram showing interactions between a short distance communication module and a functional module in accordance with another embodiment of the present disclosure.
FIG. 5 shows an exploded view of a wristwatch in accordance with another embodiment of the present disclosure.
FIG. 6 is a schematic diagram showing interactions between a functional module and a transparent conductive film in accordance with an embodiment of the present disclosure.
FIG. 7 is a schematic diagram showing a transparent conductive film attached to a top cover in accordance with an embodiment of the present disclosure.
FIG. 8 is an enlarged view of an area A shown in FIG. 7.
FIG. 9 is a schematic diagram showing a functional module in accordance with an embodiment of the present disclosure.
FIG. 10 shows an exploded view of a wristwatch in accordance with another embodiment of the present disclosure.
FIG. 11 is a flowchart of a method for operating a wearable device in accordance with an embodiment of the present disclosure.
FIG. 12 is a flowchart of a method for operating a wearable device in accordance with another embodiment of the present disclosure.

### DETAILED DESCRIPTION OF THE DISCLOSURE

The present disclosure provides a wearable device. The wearable device includes a short distance communication module disposed therein. The wearable device may be but is not limited to a device, such as a wristwatch, a bracelet, and a keychain, able to communicate with other electronic devices by way of short distance communication.

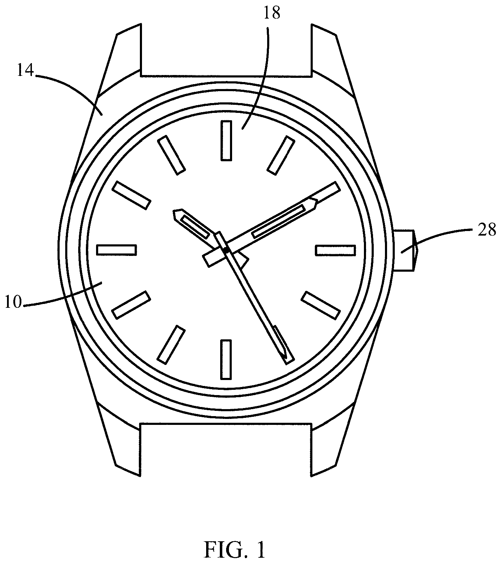

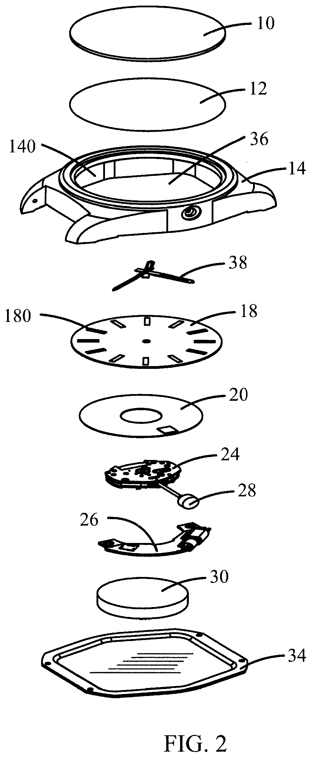

As an example, the wearable device is illustrated by a wristwatch in the following description. Please refer to FIG. 1 and FIG. 2. FIG. 1 shows a top view of a wristwatch in accordance with an embodiment of the present disclosure. FIG. 2 shows an exploded view of the wristwatch shown in FIG. 1.

The wristwatch includes a top cover 10, an antenna 12, a housing 14, a time display element 18, a short distance communication module 20, a movement 24, a functional module 26, a crown 28, a battery 30, and a bottom cover 34.

The top cover 10, the housing 14, and the bottom cover 34 define an accommodating space 36 from top to bottom. The top cover 10, the housing 14, and the bottom cover 34 are used to protect mechanical structures and/or electronic components inside the wristwatch.

The time display element 18 is disposed in the accommodating space 36 and includes physical scales 180 (e.g., one o'clock to twelve o'clock) and at least one indicator 38 (e.g., physical hands including an hour hand, a minute hand, and a second hand) disposed above the physical scales 180. The at least one indicator 38 is driven by the movement 24 and cooperates with the physical scales 180 of the time display element 18 to show the time. Through the transparent top cover 10 and the antenna 12, a user can perceive the position information (i.e., time information) indicated by the at least one indicator 38.

It is noted that, in the present embodiment, the wristwatch is a watch having physical hands, and the time display element 18 includes a physical dial. In another embodiment, the wristwatch is a digital watch, and the time display element 18 includes a display for displaying the time with displayed hands or digital numbers.

The functional module 26 can be a BLUETOOTH module that can communicate with an electronic device (e.g., a mobile terminal) via the antenna 12. Since the antenna 12 serves as a BLUETOOTH antenna that operates at a frequency ranging from 2.4 GHz to 2.485 GHz, the wristwatch can perform BLUETOOTH communication with the electronic device. In another embodiment, the functional module 18 can also be deployed at a watch strap of the wristwatch.

Preferably, the top cover 10 is made of a transparent material (such as glass). The antenna 12 is formed on a bottom surface of the top cover 10. It is noted that the antenna (i.e., BLUETOOTH antenna) 12 is a light-permeable structure. After the antenna 12 is formed on the bottom surface of the top cover 10, the field of view of a user will not be affected by the antenna 12 when the user checks the time through the top cover 10.

The short distance communication module 20 can be fixed to and disposed beneath the time display element 18. The short distance communication module 20 may be a RFID module or a NFC module. The short distance communication module 20 operates at a frequency ranging from 1.32MHz to 18MHz (the standard frequency is 13.56 MHz). The short distance communication module 20 has a communication distance equal to or less than 10cm. Specifically, the short distance communication module 20 can communicate with an external device (such as a tag or a tag reader) within the communication distance.

It is noted that the operating frequencies of the short distance communication module 20 and the functional module (i.e., the BLUETOOTH module) 26 are different from each other. Accordingly, their signals do not interfere with each other.

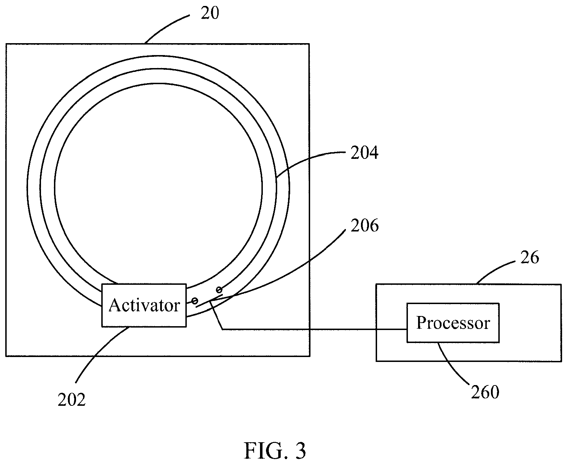

FIG. 3 is a schematic diagram showing interactions between the short distance communication module 20 and the functional module 26 in accordance with an embodiment of the present disclosure. As shown in FIG. 3, the short distance communication module 20 includes an activator 202, a coil 204, and a switch 206. The functional module 26 includes a processor (or a controller) 260. The short distance communication module 20 can be an active or a passive RFID/NFC module. In terms of the active RFID/NFC module, the activator 202 applies to the coil 204 with an electric current varying with time. Accordingly, the coil 204 generates electromagnetic signals for communication with the external device. In terms of the passive RFID/NFC module, electromagnetic signals from the external device make the coil 204 generate an induced current that can provide energy to the activator 202. Then, recorded data are transmitted by the activator 202 via the coil 204 in a form of electromagnetic signals.

In the present disclosure, according to a user operation, the coil 204 of the short distance communication module 20 can be controlled to emit electromagnetic signals. Specifically, the user can perform an operation onto the wristwatch to enable the coil 204 of the short distance communication module 20 to emit the electromagnetic signals, disable the coil 204 to emit the electromagnetic signals, or adjust the amplitude of the electromagnetic signals. For instance, such an operation can make the processor (or the controller) 260 of the functional module 26 control the short distance communication module 20 to enable or disable the coil 204 to emit the electromagnetic signals, or to adjust the electromagnetic signals.

It is noted that, in an embodiment, the processor (or the controller) 260 only has to be disposed in the wristwatch without having to be assembled into the functional module 26 to carry out BLUETOOTH communication functions. That is, the processor 260 can be implemented by any controller configured to receive and process user operations. The controller is connected to the short distance communication module 20 to control the generation of the electromagnetic signals.

It is noted that the short distance communication module 20 of the present disclosure can be implemented by a RFID module, or alternatively by a NFC module. Also, the present disclosure is applicable to an active short distance communication module and is also applicable to a passive short distance communication module.

Specifically, in the embodiment depicted in FIG. 3, the switch 206 is connected in a circuit loop formed by the coil 204. After receiving the user operation, the processor 260 of the functional module 26 or any controller of the wristwatch transmits a switching signal to the switch 206 of the short distance communication module 20 to turn the circuit loop of the coil 204 on or off. In such a way, an electric current is allowed to flow through the coil 204 or the current is stopped, and this enables or disables the coil 204 to emit the electromagnetic signals. It is noted that the coil 204 actually forms the circuit loop while the coil 204 shown in FIG. 3 is only for illustration.

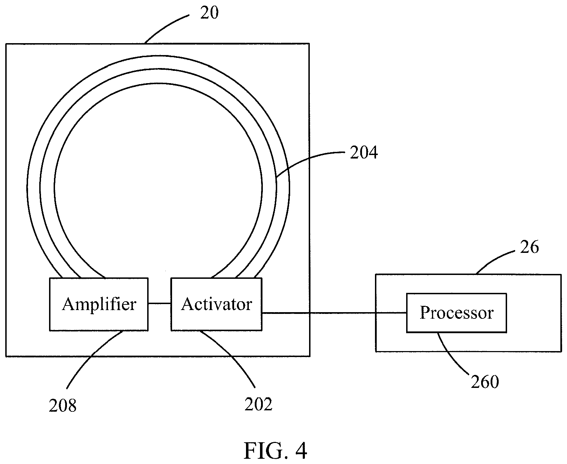

FIG. 4 is a schematic diagram showing interactions between the short distance communication module 20 and the functional module 26 in accordance with another embodiment of the present disclosure. As shown in FIG. 4, the short distance communication module 20 includes an activator 202, a coil 204, and an amplifier 208. The amplifier 208 is connected to the activator 202 and is configured to adjust the magnitude of an electric current generated by the activator 202. The processor 260 of the functional module 26 or any controller of the wristwatch is connected to the activator 202. In this embodiment, after receiving the user operation, the processor 260 of the functional module 26 or any controller of the wristwatch transmits an adjusting signal to the activator 202 of the short distance communication module 20 to make the activator 202 inform the amplifier 208 to adjust the magnitude of the electric current, thereby adjusting the magnitude of the electromagnetic signals emitted by the coil 204.

It is noted that after receiving the user operation, the processor 260 or any controller can control the activator 202 to adjust the electric current outputted by the amplifier 208 to zero, a predetermined magnitude, or to switch the magnitude of the electric current in a predetermined order.

For instance, when the user operation is received for the first time, the processor 260 or any controller adjusts the electric current outputted by the amplifier 208 to a predetermined magnitude, that is, enabling transmission of the electromagnetic signals. When the user operation is received for the second time, the electric current outputted by the amplifier 208 is increased (or decreased) by a certain amount. When the user operation is received for the third time, the electric current outputted by the amplifier 208 is increased (or decreased) again by a certain amount. When the user operation is received for the fourth time, the amplitude of the electric current outputted by the amplifier 208 is adjusted to zero, that is, disabling transmission of the electromagnetic signals. Alternatively, according to a first user operation, the electric current outputted by the amplifier 208 is enabled; according to a second user operation, the electric current outputted by the amplifier 208 is disabled. Alternatively, according to different user operations, the amplifier 208 outputs different magnitudes of electric current.

In the present disclosure, it is convenient for a user to perform user operations to control the electromagnetic signals emitted by the coil 204 of the short distance communication module (e.g., the RFID/NFC module) 20 of the wearable device (e.g., the wristwatch) to enable, disable, or adjust the electromagnetic signals. Therefore, the present disclosure can reduce unnecessary power loss of the short distance communication module 20, increase usage time of the wearable device, and improve service life of a battery of the wearable device. Meanwhile, it is convenient for the user to shut down the short distance communication module 20 to reduce the possibility of skimming or eavesdropping, thereby increasing the security.

In an application scenario of the present disclosure, a user can use the wearable device having the short distance communication module 20 to carry on mobile payment. For instance, the user can perform a clicking operation onto the wearable device (the wearable device can detect such a clicking operation) to enable transmission of the electromagnetic signals of the short distance communication module 20 to pay money to a seller. After the money is paid, the clicking operation can be performed again to disable the transmission of the electromagnetic signals to reduce power loss and the possibility of skimming or eavesdropping. The user can also perform the clicking operation to switch the magnitude of the electromagnetic signals. For example, when the magnitude of the electromagnetic signals transmitted by the short distance communication module 20 of the wearable device is too low to be sensed by an RF tag or reader to accomplish the payment, the user can increase the magnitude of the electromagnetic signals each time by the clicking operation to adapt to various types of RF tags or readers.

The present disclosure provides two rapid and efficient mechanisms to detect the user operations. The two mechanisms are (i) detecting an operation performed by a user onto a conductive film of the wearable device; and (ii) sensing a motion (e.g., a hand gesture or a posture) of a user made to the wearable device, by using a sensor (e.g., an accelerometer, a gravity sensor, an angular rate sensor, and a gyroscope) of the wearable device.

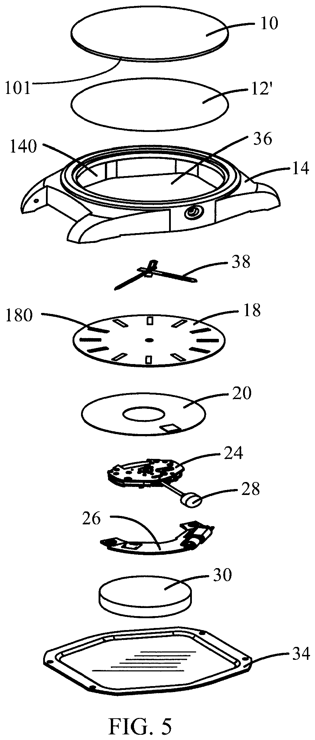

Using the conductive film to detect the user operations is illustrated with reference to FIG. 5, which shows an exploded view of a wristwatch in accordance with another embodiment of the present disclosure. Taking the wristwatch for example again, different from the embodiments shown in FIG. 1 and FIG. 2, the wristwatch of the present embodiment includes a transparent conductive film 12' formed on or attached to a lower surface (or a wall 101) of the top cover 10. The top cover 10 and the transparent conductive film 12' have excellent light transmittance. The assembly of the top cover 10 and the transparent conductive film 12' still has a light transmittance greater than 70%. Accordingly, when a user checks the time through the top cover 10, the field of view of the user will not be affected by the transparent conductive film 12'. The transparent conductive film 12' is configured to detect an approximal operation or a touch operation of the user. The detailed explanation is as follows.

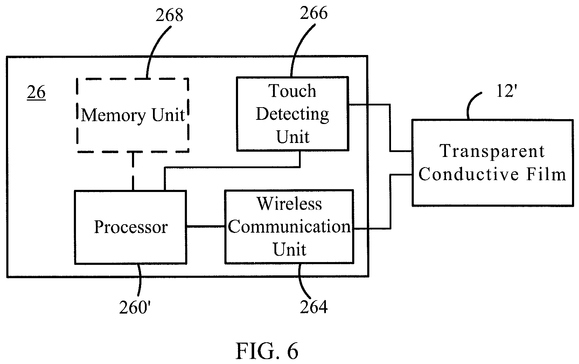

FIG. 6 is a schematic diagram showing interactions between the functional module 26 and the transparent conductive film 12' in accordance with an embodiment of the present disclosure. As shown in FIG. 6, the functional module 26 of the present embodiment includes a processor (or a controller) 260', a wireless communication unit 264, and a touch detecting unit 266.

The wireless communication unit 264 can be a BLUETOOTH transceiver that is electrically connected to the processor (or the controller) 260'. The transparent conductive film 12' can have a BLUETOOTH antenna formed thereon. The wireless communication unit 264 wirelessly communicates with an external communication device using the BLUETOOTH antenna formed on the transparent conductive film 12'. The functional module 26 may also include a memory unit 268. The memory unit 268 is configured to store the data required by the processor (or the controller) 260'. Also, the memory unit 268 may be integrated into the processor (or the controller) 260'.

A feature of the present disclosure is that the touch detecting unit 266 is electrically connected to the transparent conductive film 12' and the processor (or the controller) 260'. When a user performs an action onto or above the top cover 10 shown in FIG. 6 (e.g., clicking on the top cover 10 or sliding on the top cover 10), the touch detecting unit 266 is configured to detect a signal change (e.g., an electric current change) via the transparent conductive film 12'. The signal change is generated by the action performed onto or above the top cover 10. The processor (or the controller) 260' is configured to receive the signal change and output a corresponding instruction according to the signal change.

For instance, when the user clicks on the top cover 10 shown in FIG. 6, the touch detecting unit 266 detects a signal change (e.g., an electric current change) of the transparent conductive film 12' and transmits the signal change to the processor (or the controller) 260'. According to the signal change, the processor (or the controller) 260' controls the short distance communication module 20 to enable or disable transmission of the electromagnetic signals emitted by the coil 204 (see FIG. 3 or FIG. 4), thereby enabling or disabling transmission of the electromagnetic signals between the short distance communication module 20 and the external device. Alternatively, the user can also switch or adjust the magnitude of the electromagnetic signals generated by the short distance communication module 20, by clicking on the top cover 10 (or the transparent conductive film 12') or using other types of operations.

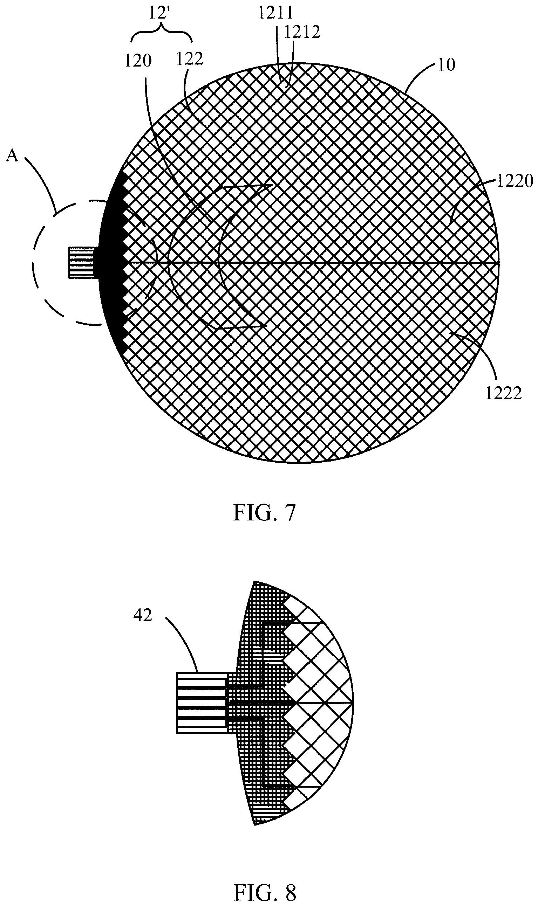

Please refer to FIG. 7 and FIG. 8. FIG. 7 is a schematic diagram showing the transparent conductive film 12' attached to the top cover 10 in accordance with an embodiment of the present disclosure. FIG. 8 is an enlarged view of an area A shown in FIG. 7.

As shown in FIG. 7, the transparent conductive film 12' is a conductive film formed in a mesh shape. In practice, the mesh shape is formed by a plurality of ultra-fine metal lines. Accordingly, the user cannot perceive the existence of the transparent conductive film 12'. The transparent conductive film 12' which the user perceives is approximately transparent.

Specifically, the transparent conductive film 12' includes a plurality of conductive wires 1211, that are interlaced with each other to construct a plurality of conductive units 1212. An integral effect of electrical signal changes (e.g., voltage or current signal changes) of all of the conductive units 1212 in the transparent conductive film 12' is generated by an approximal action or a touch action performed onto or above the top cover 10. The touch detecting unit 266 detects the integral effect of electrical signal changes of all of the conductive units 1212 in the transparent conductive film 12' to generate a detecting signal. According to the detecting signal generated by the touch detecting unit 266, the processor (or the controller) 260' controls or adjusts the electromagnetic signals generated by the coil 204 of the short distance communication module 20.

The integral effect of electrical signal changes of all of the conductive units 1212 in the transparent conductive film 12' refers to an electric signal detected by signal lines connected between the transparent conductive film 12' and the touch detecting unit 266. The integral effect is contributed by all of or any effective part of the conductive units 1212.

It can be understood by a person skilled in the art that using the transparent conductive film 12' to detect the user operations as described above is apparently different from touch operation detection technologies in conventional touch panels and image display technologies with pixel electrodes in conventional display panels.

The transparent conductive film 12' may include a communication part 120 and a sensing part 122. The communication part 120 is formed on or attached to a part of the lower surface of the top cover 10. The sensing part 122 is formed on or attached to a remaining part of the lower surface of the top cover 10. The communication part 120 and the sensing part 122 are electrically disconnected from each other. The communication part 120 can be a BLUETOOTH antenna and is electrically connected to the wireless communication unit (e.g., a BLUETOOTH transceiver) 264 of the functional module 26 and configured to transmit and receive signals between the wireless communication unit 264 and the external communication device. The sensing part 122 is electrically connected to the touch detecting unit 266 and configured to transmit the signal changes (e.g., the current changes) to the touch detecting unit 266 via a signal transmitting part 42.

An approach to manufacturing the communication part 120 and the sensing part 122 is to form a complete conductive film on the lower surface of the top cover 10, and then the complete conductive film is split into the communication part 120 and the sensing part 122 by laser patterning. A slit is formed between the communication part 120 and the sensing part 122 such that the communication part 120 and the sensing part 122 are not affected by each other.

In the embodiment shown in FIG. 5, the sensing part 122 is split into a first area 1220 and a second area 1222. The first area 1220 and the second area 1222 are electrically disconnected from each other. When a finger of the user slides from the first area 1220 to the second area 1222, the sensing part 122 in the first area 1220 can transmit a signal change to the touch detecting unit 266, and the sensing part 122 in the second area 1222 can transmit a signal change to the touch detecting unit 266. The processor (or the controller) 260' analyzes the two signal changes and outputs a corresponding instruction according to the two signal changes.

For instance, when the user clicks on the first area 1220, the processor 260' outputs a corresponding instruction to the short distance communication module 20 to enable transmission of the electromagnetic signals. When the user clicks on the second area 1222, the processor 260' controls the short distance communication module 20 to disable transmission of the electromagnetic signals. When a finger of the user slides from the first area 1220 to the second area 1222, the processor 260' controls the short distance communication module 20 to decrease the magnitude of the electromagnetic signals. When the finger of the user slides from the second area 1222 to the first area 1220, the processor 260' controls the short distance communication module 20 to increase the magnitude of the electromagnetic signals.

In another embodiment, the sensing part 122 is not split into two areas. The sensing part 122 includes only one area. In yet another embodiment, the sensing part 122 may be split into a plurality of areas that are electrically disconnected from one another. These areas may have a same size or may have different sizes.

It is noted that, in an embodiment, the coil 204 of the short distance communication module 20 may be disposed on the transparent conductive film 12', that is, the transparent conductive film 12' has the sensing part 122, the communication part 120, and the coil 204 that are disconnected from one another. In another embodiment, in addition to the sensing part 122, the transparent conductive film 12' has one of the communication part 120 and the coil 204 disposed thereon.

In the wearable device (e.g., the wristwatch) of the present embodiment, the transparent conductive film 12' is formed on the lower surface of the top cover 10 instead of being formed in an accommodating space or inside a housing, and the transparent conductive film 12' has an antenna structure. As a result, when the transparent conductive film 12' transmits or receives signals, the signals are not shielded or affected by the housing. Furthermore, the transparent conductive film 12' of the present embodiment not only transmits or receives the signals between the wearable device and an external device, but also detects an action performed onto the top cover 10. That is, the wearable device of the present embodiment can use the transparent conductive film 12' to detect the action performed onto or above the top cover 10. Accordingly, a user can operate the wearable device more easily.

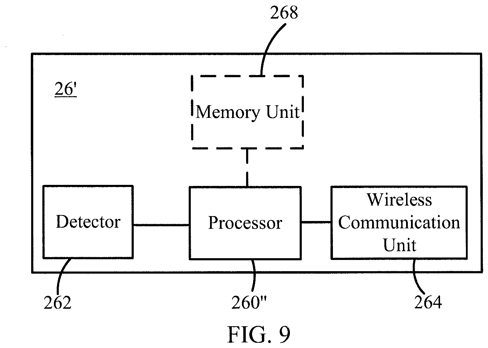

Using a detector to detect the user operations is illustrated with reference to FIG. 9, which is a schematic diagram showing a functional module 26' in accordance with an embodiment of the present disclosure. In this embodiment, the functional module 26' includes a processor (or a controller) 26", at least one detector 262, a wireless communication unit 264, and a memory unit 268. The wireless communication unit 264 and the memory unit 268 can be referred to the above context and are not detailed herein. The detector 262 is configured to detect a displacement, an angular displacement, and/or a periodic displacement or angular displacement of the detector 262 in a three-dimensional space to generate a detecting signal. That is, the detector 262 can detect an action (e.g., a hand gesture and a posture) performed onto the wearable device by a user. The action may be a gesture of a hand of the user, such as clicking, rotating, and waving. The detector 262 may be implemented by an accelerometer, a gravity sensor, an angular rate sensor, and a gyroscope, but it is not limited thereto. The processor (or the controller) 260" is electrically connected to the detector 262 and the short distance communication module 20. According to the detecting signal generated by the detector 262, the processor (or the controller) 260" controls or adjusts the electromagnetic signals generated by the coil 204 of the short distance communication module 20.

The wearable device (e.g., the wristwatch) of the present embodiment uses the detector 262 to detect an action (e.g., a hand gesture or a posture) performed onto the wearable device by a user to trigger the coil 204 of the short distance communication module 20 to enable or disable transmission of the electromagnetic signals or to adjust the magnitude of the electromagnetic signals. Accordingly, a user can operate the wearable device more easily.

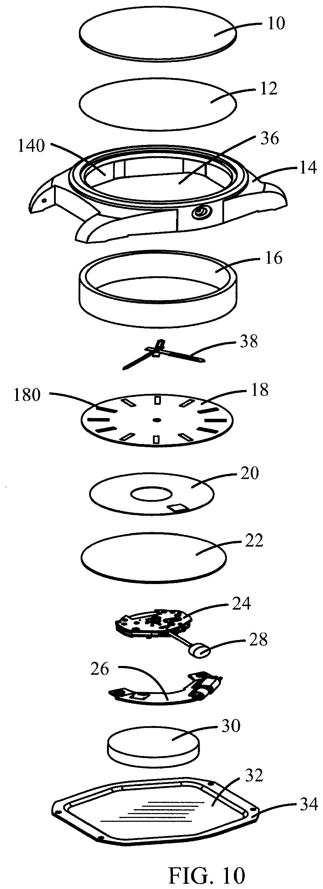

In addition, a metal housing or an electrically conductive housing will affect the RFID/ NFC module in the wearable device and reduce the magnitude of the electromagnetic signals transmitted between the RFIC/NFC module and an RF tag or reader. The present disclosure also provides a solution for this problem. FIG. 10 shows an exploded view of a wristwatch in accordance with another embodiment of the present disclosure. Different from the embodiments shown in FIG. 1 and FIG. 2, the housing 14 of the present embodiment is made of a metal material or an electrically conductive material that will affect the transmitting and receiving of electromagnetic waves (data) of the short distance communication module 20. In order to reduce effect of the housing 14 on the short distance communication module 20, the wristwatch of the present embodiment includes a first magnetic isolation layer 16, a second magnetic isolation layer 22, and a third magnetic isolation layer 32. These magnetic isolation layers 16, 22, and 32 can absorb the electromagnetic waves to achieve effect of suppressing electromagnetic wave interference.

The first magnetic isolation layer 16 is formed on a surface (i.e., an inner surface) 140 of the housing 14 facing the accommodating space 36. The second magnetic isolation layer 22 is disposed beneath the short distance communication module 20. Preferably, the second magnetic isolation layer 22 is attached to a lower surface of the short distance communication module 20. The third magnetic isolation layer 32 is formed on the bottom cover 34.

In the wristwatch of the present embodiment, when the short distance communication module 20 communicates with an external device (e.g., an RF tag or reader), electromagnetic waves are transmitted from the external device to the short distance communication module 20. The first magnetic isolation layer 16 and the second magnetic isolation layer 22 can absorb the electromagnetic waves to avoid a situation that the electromagnetic waves cannot be received by the short distance communication module 20 because the electromagnetic waves are affected by the housing 14 and other metal elements in the accommodating space 36. Furthermore, the second magnetic isolation layer 22 can avoid a situation that the short distance communication module 20 is affected by the functional module 26 and other metal elements beneath the short distance communication module 20. That is, the second magnetic isolation layer 22 can achieve effect of suppressing electromagnetic wave interference.

It is noted that the third magnetic isolation layer 32 is an optional element. The third magnetic isolation layer 32 can further absorb electromagnetic waves that are not absorbed by the first magnetic isolation layer 16 and the second magnetic isolation layer 22.

It is noted that any one or two of the first magnetic isolation layer 16, the second magnetic isolation layer 22, and the third magnetic isolation layer 32 can be selected to carry out absorbing the electromagnetic waves. Any number of magnetic isolation layers is also workable.

In the prior art, a short distance communication module cannot be disposed in a communication device with a metal housing or an electrically conductive housing. In the wearable device of the present embodiment, at least one magnetic isolation layer capable of absorbing electromagnetic waves is disposed, so as to avoid a situation that the electromagnetic waves cannot be received by the short distance communication module because the electromagnetic waves are affected by the housing made of the metal material or the electrically conductive material. As a result, the short distance communication device (e.g., a RFID module or a NFC module) can be disposed in the communication device with the housing made of the metal material or the electrically conductive material.

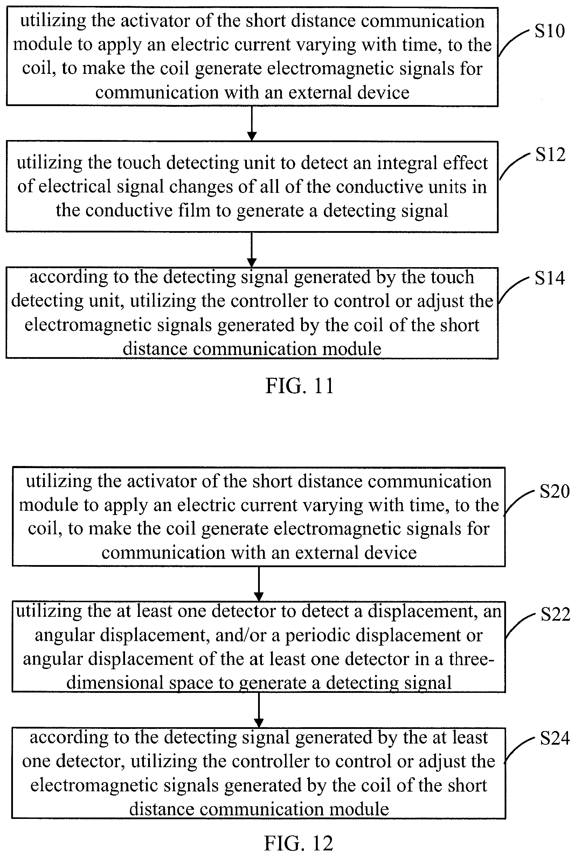

FIG. 11 is a flowchart of a method for operating a wearable device in accordance with an embodiment of the present disclosure.

The wearable device includes a cover having at least one wall that defines an accommodating space. The wearable device further includes a conductive film disposed on a surface of the wall of the cover, and a short distance communication module, a touch detecting unit, and a controller that are disposed in the accommodating space. The conductive film includes a plurality of conductive wires that are interlaced with each other to construct a plurality of conductive units. The short distance communication module includes a coil and an activator. The activator is electrically connected to the coil. The touch detecting unit is electrically connected to the conductive film. The controller is electrically connected to the touch detecting unit and the short distance communication module. The method includes the following operations.

In S10, the activator of the short distance communication module is used to apply an electric current varying with time, to the coil, to make the coil generate electromagnetic signals for communication with an external device.

In S12, the touch detecting unit is used to detect an integral effect of electrical signal changes of all of the conductive units in the conductive film to generate a detecting signal.

In S14, according to the detecting signal generated by the touch detecting unit, the controller is used to control or adjust the electromagnetic signals generated by the coil of the short distance communication module.

The method may further include the following operation. After the controller receives the detecting signal generated by the touch detecting unit, the controller is used to turn on or off a circuit loop formed by the coil of the short distance communication module.

The method may further include the following operation. After the controller receives the detecting signal generated by the touch detecting unit, the controller is used to transmit an adjusting signal to the short distance communication module to make the short distance communication module adjust the magnitude of the electromagnetic signals generated by the coil.

FIG. 12 is a flowchart of a method for operating a wearable device in accordance with another embodiment of the present disclosure.

The wearable device includes a cover having at least one wall that defines an accommodating space. The wearable device further includes a short distance communication module, at least one detector, and a controller that are disposed in the accommodating space. The short distance communication module includes a coil and an activator. The activator is electrically connected to the coil. The controller is electrically connected to the at least one detector and the short distance communication module. The method includes the following operations.

In S20, the activator of the short distance communication module is used to apply an electric current varying with time, to the coil, to make the coil generate electromagnetic signals for communication with an external device.

In S22, the at least one detector is used to detect a displacement, an angular displacement, and/or a periodic displacement or angular displacement of the detector in a three-dimensional space to generate a detecting signal.

In S24, according to the detecting signal generated by the at least one detector, the controller is used to control or adjust the electromagnetic signals generated by the coil of the short distance communication module.

The method may further include the following operation. After the controller receives the detecting signal generated by the at least one detector, the controller is used to turn on or off a circuit loop formed by the coil of the short distance communication module.

The method may further include the following operation. After the controller receives the detecting signal generated by the at least one detector, the controller is used to transmit an adjusting signal to the short distance communication module to make the short distance communication module adjust the magnitude of the electromagnetic signals generated by the coil.

In the methods of present disclosure, it is convenient for a user to perform user operations (for example, using the conductive film to detect the user operations or using the detector to detect a hand gesture or a posture of the user) to control the electromagnetic signals emitted by the coil of the short distance communication module of the wearable device. As a result, the possibility of skimming or eavesdropping is reduced, thereby increasing the security.

While the preferred embodiments of the present disclosure have been illustrated and described in detail, various modifications and alterations can be made by persons skilled in this art. The embodiment of the present disclosure is therefore described in an illustrative but not restrictive sense. The invention is defined by the appended independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

## Claims

1. A wearable device, comprising:
a cover, having at least one wall (101), that defines an accommodating space (36);
a short distance communication module (20) disposed in the accommodating space (36), the short distance communication module (20) comprising a coil (204) and an activator (202) electrically connected to the coil (204) and configured to apply an electric current varying with time, to the coil (204), to make the coil (204) generate electromagnetic signals for communication with an external device;
a conductive film (12') disposed on a surface of the wall (101) of the cover, the conductive film (12') comprising a plurality of conductive wires (1211) that are interlaced with each other to construct a plurality of conductive units (1212);
a touch detecting unit (266) electrically connected to the conductive film (12') and configured to detect an integral effect of electrical signal changes of all of the conductive units (1212) in the conductive film (12') to generate a detecting signal, the integral effect contributed by all of or any effective part of the conductive units (1212); and
a controller (260) electrically connected to the touch detecting unit (266) and the short distance communication module (20), and according to the detecting signal generated by the touch detecting unit (266), the controller (260) configured to control or adjust the electromagnetic signals generated by the coil (204) of the short distance communication module (20),
wherein the conductive film (12') comprises a sensing part (122) that is split into a first area (1220) and a second area (1222) which are electrically disconnected from each other, the sensing part (122) in the first area (1220) and the sensing part (122) in the second area (1222) transmit signal changes to the touch detecting unit (266) for the controller (260) to control the short distance communication module (20) to enable transmission of the electromagnetic signals in response to a touch on the first area (1220) and to control the short distance communication module (20) to disable transmission of the electromagnetic signals in response to a touch on the second area (1222).

2. The wearable device according to claim 1, wherein the short distance communication module (20) is selected from a group consisting of a radio frequency identification (RFID) module and a near field communication (NFC) module.

3. The wearable device according to claim 1, wherein the short distance communication module (20) further comprises:
a switch (206) connected in a circuit loop formed by the coil (204), wherein after receiving the detecting signal generated by the touch detecting unit (266), the controller (260) transmits a switching signal to the switch (206) of the short distance communication module (20) to turn the circuit loop of the coil (204) on or off.

4. The wearable device according to claim 1, wherein the short distance communication module (20) operates at a frequency ranging from 1.32MHz to 18MHz.

5. The wearable device according to claim 1, wherein the cover comprises:
atop cover (10);
a housing (14); and
a bottom cover (34), wherein the top cover (10), the housing (14), and the bottom cover (34) defines the accommodating space (36) from top to bottom.

6. The wearable device according to claim 5, wherein the conductive film (12') comprises a transparent conductive film formed on a lower surface (101) of the top cover (10), **characterized in that** an assembly of the top cover (10) and the transparent conductive film has a light transmittance greater than 70%, and **characterized in that** the integral effect of the electrical signal changes of all of the conductive units (1212) in the transparent conductive film is generated by an approximal action or a touch action performed onto or above the top cover (10).

7. The wearable device according to claim 1, wherein the conductive film (12') comprises:
a communication part (120) formed on a part of a surface of the cover; and
the sensing part (122) formed on a remaining part of the surface of the cover,
wherein a slit is formed between the sensing part (122) and the communication part (120).

8. The wearable device according to claim 5, wherein the wearable device further comprises:
a first magnetic isolation layer (16) formed on a surface of the housing (14) facing the accommodating space (36);
a time display element (18) disposed in the accommodating space (36), the time display element (18) comprising an electromagnetic wave permeable material, the short distance communication module (20) disposed beneath the time display element (18);
a second magnetic isolation layer (22) disposed beneath the short distance communication module (20); and
a movement (24) disposed in the accommodating space (36) and located below the second magnetic isolation layer (22).

9. The wearable device according to claim 8, wherein the wearable device further comprises:
a third magnetic isolation layer (32) formed on the bottom cover (34).

10. The wearable device according to claim 1, wherein the wearable device further comprising:
a time display element (18) disposed in the accommodating space (36).

11. The wearable device according to claim 10, wherein the time display element (18) comprises physical scales (180) and at least one physical indicator (38) disposed above the physical scales (180).

12. A method for operating a wearable device, the wearable device comprising a cover, having at least one wall (101), that defines an accommodating space (36), the wearable device further comprising a conductive film (12') disposed on a surface of the wall (101) of the cover, and a short distance communication module (20), a touch detecting unit (266), and a controller (260) that are disposed in the accommodating space (36), the conductive film (12') comprising a plurality of conductive wires (1211) that are interlaced with each other to construct a plurality of conductive units (1212), the short distance communication module (20) comprising a coil (204) and an activator (202) electrically connected to the coil (204), the touch detecting unit (266) electrically connected to the conductive film (12'), the controller (260) electrically connected to the touch detecting unit (266) and the short distance communication module (20), the conductive film (12') comprising a sensing part (122) that is split into a first area (1220) and a second area (1222) which are electrically disconnected from each other, the method comprising:
utilizing the activator (202) of the short distance communication module (20) to apply an electric current varying with time, to the coil (204), to make the coil (204) generate electromagnetic signals for communication with an external device;
utilizing the touch detecting unit (266) to detect an integral effect of electrical signal changes of all of the conductive units (1212) in the conductive film (12') to generate a detecting signal, the integral effect contributed by all of or any effective part of the conductive units (1212);
according to the detecting signal generated by the touch detecting unit (266), utilizing the controller (260) to control or adjust the electromagnetic signals generated by the coil (204) of the short distance communication module (20);
transmitting by the sensing part (122) in the first area (1220) and the sensing part (122) in the second area (1222) signal changes to the touch detecting unit (266);
controlling by the controller (260), the short distance communication module (20) to enable transmission of the electromagnetic signals in response to a touch on the first area (1220); and
controlling by the controller (260), the short distance communication module (20) to disable transmission of the electromagnetic signals in response to a touch on the second area (1222).

13. The method according to claim 12, further comprising:
utilizing the controller (260) to turn on or off a circuit loop formed by the coil (204) of the short distance communication module (20) after receiving the detecting signal generated by the touch detecting unit (266).

## Patentansprüche

1. Tragbare Vorrichtung, umfassend:
eine Abdeckung, die zumindest eine Wand (101) aufweist, die einen Aufnahmeraum (36) definiert;
ein Kurzstreckenkommunikationsmodul (20), das im Aufnahmeraum (36) angeordnet ist, wobei das Kurzstreckenkommunikationsmodul (20) eine Spule (204) und einen Aktivator (202) umfasst, der mit der Spule (204) elektrisch verbunden ist und dafür ausgelegt ist, einen elektrischen Strom, der mit der Zeit variiert, auf die Spule (204) anzulegen, um zu veranlassen, dass die Spule (204) elektromagnetische Signale zur Kommunikation mit einem äußeren Gerät erzeugt;
einen leitenden Film (12'), der an einer Fläche der Wand (101) der Abdeckung angeordnet ist, wobei der leitende Film (12') eine Vielzahl von leitenden Drähten (1211) umfasst, die miteinander verflochten sind, um eine Vielzahl von leitenden Einheiten (1212) zu bilden;
eine Berührungserfassungseinheit (266), die mit dem leitenden Film (12') elektrisch verbunden ist und dafür ausgelegt ist, einen integralen Effekt von elektrischen Signaländerungen sämtlicher leitenden Einheiten (1212) im leitenden Film (12') zu erfassen, um ein Erfassungssignal zu erzeugen, wobei zum integralen Effekt alle leitenden Einheiten (1212) oder irgendeiner wirksamer Teil der leitenden Einheiten (1212) beitragen; und
einen Regler (260), der mit der Berührungserfassungseinheit (266) und mit dem Kurzstreckenkommunikationsmodul (20) elektrisch verbunden ist, und wobei gemäß dem Erfassungssignal, das von der Berührungserfassungseinheit (266) erzeugt wird, der Regler (260) dafür ausgelegt ist, die elektromagnetischen Signale, die von der Spule (204) des Kurzstreckenkommunikationsmoduls (20) erzeugt werden, zu steuern oder anzupassen,
worin der leitende Film (12') einen fühlenden Teil (122) umfasst, der in einen ersten Bereich (1220) und einen zweiten Bereich (1222) geteilt ist, die voneinander elektrisch getrennt sind, wobei der fühlende Teil (122) im ersten Bereich (1220) und der fühlende Teil (122) im zweiten Bereich (1222) der Berührungserfassungseinheit (266) Signaländerungen übertragen, damit der Regler (260) das Kurzstreckenkommunikationsmodul (20) steuert, um die Übertragung der elektromagnetischen Signale in Erwiderung auf eine Berührung auf dem ersten Bereich (1220) zu ermöglichen, und um das Kurzstreckenkommunikationsmodul (20) zu steuern, um die Übertragung der elektromagnetischen Signale in Erwiderung auf eine Berührung auf dem zweiten Bereich (1222) zu blockieren.

2. Tragbare Vorrichtung nach Anspruch 1, worin das Kurzstreckenkommunikationsmodul (20) aus einer Gruppe ausgewählt wird, die aus einem Radiofrequenzidentifikations (RFID)-modul und aus einem Nahfeldkommunikations (NFC)-modul besteht.

3. Tragbare Vorrichtung nach Anspruch 1, worin das Kurzstreckenkommunikationsmodul (20) ferner umfasst:
einen Schalter (206), der in einer Schaltungsschleife, die von der Spule (204) gebildet ist, angeschlossen ist, worin nach dem Empfangen des Erfassungssignals, das von der Berührungserfassungseinheit (266) erzeugt wird, der Regler (260) dem Schalter (206) des Kurzstreckenkommunikationsmoduls (20) ein Schaltsignal überträgt, um die Schaltungsschleife der Spule (204) ein- oder auszuschalten.

4. Tragbare Vorrichtung nach Anspruch 1, worin das Kurzstreckenkommunikationsmodul (20) mit einer Frequenz zwischen 1,32 MHz und 18 MHz arbeitet.

5. Tragbare Vorrichtung nach Anspruch 1, worin die Abdeckung umfasst:
eine obere Abdeckung (10);
ein Gehäuse (14); und
eine untere Abdeckung (34), worin die obere Abdeckung (10), das Gehäuse (14) und die untere Abdeckung (34) den Aufnahmeraum (36) von oben nach unten definieren.

6. Tragbare Vorrichtung nach Anspruch 5, worin der leitende Film (12') einen transparenten leitenden Film (12') umfasst, der an einer unteren Fläche (101) der oberen Abdeckung (10) ausgebildet ist, **dadurch gekennzeichnet, dass** eine Anordnung aus der oberen Abdeckung (10) und dem transparenten leitenden Film eine Lichtdurchlässigkeit größer als 70% hat, und **dadurch gekennzeichnet, dass** der integrale Effekt der elektrischen Signaländerungen sämtlicher leitenden Einheiten (1212) im transparenten leitenden Film von einer Annäherungsaktion oder einer Berührungsaktion erzeugt wird, die auf oder über die obere Abdeckung (10) durchgeführt wird.

7. Tragbare Vorrichtung nach Anspruch 1, worin der leitende Film (12') umfasst:
einen Kommunikationsteil (120), der an einem Teil der Fläche der Abdeckung ausgebildet ist; und
den fühlenden Teil (122), der an einem restlichen Teil der Fläche der Abdeckung ausgebildet ist,
worin ein Schlitz zwischen dem fühlenden Teil (122) und dem Kommunikationsteil (120) ausgebildet ist.

8. Tragbare Vorrichtung nach Anspruch 5, worin die tragbare Vorrichtung ferner umfasst:
eine erste magnetische Isolierschicht (16), die an einer Fläche des Gehäuses (14) ausgebildet ist, die dem Aufnahmeraum (36) zugewandt ist;
ein Zeitanzeigeelement (18), das im Aufnahmeraum (36) angeordnet ist, wobei das Zeitanzeigeelement (18) ein für elektromagnetische Wellen durchlässiges Material umfasst, wobei das Kurzstreckenkommunikationsmodul (20) unterhalb des Zeitanzeigeelementes (18) angeordnet ist;
eine zweite magnetische Isolierschicht (22), die unterhalb des Kurzstreckenkommunikationsmoduls (20) angeordnet ist; und
ein Uhrwerk (24), das im Aufnahmeraum (36) angeordnet und unter der zweiten magnetischen Isolierschicht (22) gelegen ist.

9. Tragbare Vorrichtung nach Anspruch 8, worin die tragbare Vorrichtung ferner umfasst:
eine dritte magnetische Isolierschicht (32), die an der unteren Abdeckung (34) ausgebildet ist.

10. Tragbare Vorrichtung nach Anspruch 1, worin die tragbare Vorrichtung ferner umfasst:
ein Zeitanzeigeelement (18), das im Aufnahmeraum (36) angeordnet ist.

11. Tragbare Vorrichtung nach Anspruch 10, worin das Zeitanzeigeelement (18) physische Indizes (180) und zumindest einen physischen Zeiger (38) umfasst, der über den physischen Indizes (180) angeordnet ist.

12. Verfahren zum Betreiben einer tragbaren Vorrichtung, wobei die tragbare Vorrichtung eine Abdeckung umfasst, die zumindest eine Wand (101) aufweist, die einen Aufnahmeraum (36) definiert, wobei die tragbare Vorrichtung ferner einen leitenden Film (12'), der an einer Fläche der Wand (101) der Abdeckung angeordnet ist, und ein Kurzstreckenkommunikationsmodul (20), eine Berührungserfassungseinheit (266) und einen Regler (260) umfasst, die im Aufnahmeraum (36) angeordnet sind, wobei der leitende Film (12') eine Vielzahl von leitenden Drähten (1211) umfasst, die miteinander verflochten sind, um eine Vielzahl von leitenden Einheiten (1212) zu bilden, das Kurzstreckenkommunikationsmodul (20) eine Spule (204) und einen Aktivator (202) umfasst, der mit der Spule (204) elektrisch verbunden ist, die Berührungserfassungseinheit (266) mit dem leitenden Film (12') elektrisch verbunden ist, der Regler (260) mit der Berührungserfassungseinheit (266) und mit dem Kurzstreckenkommunikationsmodul (20) elektrisch verbunden ist, der leitende Film (12') einen fühlenden Teil (122) umfasst, der in einen ersten Bereich (1220) und einen zweiten Bereich (1222) geteilt ist, die voneinander elektrisch getrennt sind, wobei das Verfahren umfasst:
Einsetzen des Aktivators (202) des Kurzstreckenkommunikationsmoduls (20), um einen elektrischen Strom, der mit der Zeit variiert, auf die Spule (204) anzulegen, um zu veranlassen, dass die Spule (204) elektromagnetische Signale zur Kommunikation mit einem äußeren Gerät erzeugt;
Einsetzen der Berührungserfassungseinheit (266), um einen integralen Effekt von elektrischen Signaländerungen sämtlicher leitenden Einheiten (1212) im leitenden Film (12') zu erfassen, um ein Erfassungssignal zu erzeugen, wobei zum integralen Effekt alle leitenden Einheiten (1212) oder irgendeiner wirksamer Teil der leitenden Einheiten (1212) beitragen;
gemäß dem Erfassungssignal, das von der Berührungserfassungseinheit (266) erzeugt wird, Einsetzen des Reglers (260), um die elektromagnetischen Signale, die von der Spule (204) des Kurzstreckenkommunikationsmoduls (20) erzeugt werden, zu steuern oder anzupassen;
Übertragen, durch den fühlenden Teil (122) im ersten Bereich (1220) und den fühlenden Teil (122) im zweiten Bereich (1222), von Signaländerungen der Berührungserfassungseinheit (266);
Steuern, durch den Regler (260), des Kurzstreckenkommunikationsmoduls (20), um die Übertragung der elektromagnetischen Signale in Erwiderung auf eine Berührung auf dem ersten Bereich (1220) zu ermöglichen; und
Steuern, durch den Regler (260), des Kurzstreckenkommunikationsmoduls (20), um die Übertragung der elektromagnetischen Signale in Erwiderung auf eine Berührung auf dem zweiten Bereich (1222) zu blockieren.

13. Verfahren nach Anspruch 12, ferner umfassend:
Einsetzen des Reglers (260), um eine Schaltungsschleife, die von der Spule (204) des Kurzstreckenkommunikationsmoduls (20) gebildet ist, nach dem Empfangen des Erfassungssignals, das von der Berührungserfassungseinheit (266) erzeugt wird, ein- oder auszuschalten.

## Revendications

1. Dispositif portable, comprenant :
un couvercle, ayant au moins une paroi (101), qui définit un espace de logement (36) ;
un module de communication à courte distance (20) disposé dans l'espace de logement (36), le module de communication à courte distance (20) comprenant une bobine (204) et un activateur (202) connecté électriquement à la bobine (204) et configuré pour appliquer un courant électrique variant avec le temps, à la bobine (204), pour amener la bobine (204) à générer des signaux électromagnétiques pour une communication avec un dispositif externe ;
un film conducteur (12') disposé sur une surface de la paroi (101) du couvercle, le film conducteur (12') comprenant une pluralité de fils conducteurs (1211) qui sont entrelacés les uns avec les autres pour construire une pluralité d'unités conductrices (1212) ;
une unité de détection tactile (266) connectée électriquement au film conducteur (12') et configurée pour détecter un effet intégral de changements de signal électrique de toutes les unités conductrices (1212) dans le film conducteur (12') pour générer un signal de détection, l'effet intégral apporté par la totalité ou une partie efficace quelconque des unités conductrices (1212) ; et
un contrôleur (260) connecté électriquement à l'unité de détection tactile (266) et au module de communication à courte distance (20), et selon le signal de détection généré par l'unité de détection tactile (266), le contrôleur (260) est configuré pour commander ou ajuster les signaux électromagnétiques générés par la bobine (204) du module de communication à courte distance (20),
où le film conducteur (12') comprend une partie de détection (122) qui est divisée en une première zone (1220) et une seconde zone (1222) qui sont électriquement déconnectées l'une de l'autre, la partie de détection (122) dans la première zone (1220) et la partie de détection (122) dans la seconde zone (1222) transmettent des changements de signal à l'unité de détection tactile (266) pour que le contrôleur (260) commande le module de communication à courte distance (20) pour permettre la transmission des signaux électromagnétiques en réponse à un toucher sur la première zone (1220) et pour commander le module de communication à courte distance (20) pour désactiver la transmission des signaux électromagnétiques en réponse à un toucher sur la seconde zone (1222).

2. Dispositif portable selon la revendication 1, où le module de communication à courte distance (20) est sélectionné dans un groupe constitué d'un module d'identification par radiofréquence (RFID) et d'un module de communication en champ proche (NFC).

3. Dispositif portable selon la revendication 1, où le module de communication à courte distance (20) comprend :
un commutateur (206) connecté dans une boucle de circuit formée par la bobine (204), où, après réception du signal de détection généré par l'unité de détection tactile (266), le contrôleur (260) transmet un signal de commutation au commutateur (206) du module de communication à courte distance (20) pour activer ou désactiver la boucle de circuit de la bobine (204).

4. Dispositif portable selon la revendication 1, où le module de communication à courte distance (20) fonctionne à une fréquence allant de 1,32 MHz à 18 MHz.

5. Dispositif portable selon la revendication 1, où le couvercle comprend :
un couvercle supérieur (10) ;
un logement (14) ; et
un couvercle inférieur (34), où le couvercle supérieur (10), le logement (14) et le couvercle inférieur (34) définissent l'espace de logement (36) de haut en bas.

6. Dispositif portable selon la revendication 5, où le film conducteur (12') comprend un film conducteur transparent formé sur une surface inférieure (101) du couvercle supérieur (10), **caractérisé en ce qu'**un assemblage du couvercle supérieur (10) et du film conducteur transparent a une transmittance de lumière supérieure à 70%, et **caractérisé en ce que** l'effet intégral des changements de signal électrique de toutes les unités conductrices (1212) dans le film conducteur transparent est généré par une action proximale ou une action tactile effectuée sur ou au-dessus du couvercle supérieur (10).

7. Dispositif portable selon la revendication 1, où le film conducteur (12') comprend :
une partie de communication (120) formée sur une partie d'une surface du couvercle ; et
la partie de détection (122) formée sur une partie restante de la surface du couvercle,
où une fente est formée entre la partie de détection (122) et la partie de communication (120).

8. Dispositif portable selon la revendication 5, où le dispositif portable comprend en outre :
une première couche d'isolation magnétique (16) formée sur une surface du logement (14) faisant face à l'espace de logement (36) ;
un élément d'affichage de l'heure (18) disposé dans l'espace de logement (36), l'élément d'affichage de l'heure (18) comprenant un matériau perméable aux ondes électromagnétiques, le module de communication à courte distance (20) étant disposé sous l'élément d'affichage de l'heure (18) ;
une seconde couche d'isolation magnétique (22) disposée sous le module de communication à courte distance (20) ; et
un mouvement (24) disposé dans l'espace de logement (36) et situé sous la seconde couche d'isolation magnétique (22).

9. Dispositif portable selon la revendication 8, où le dispositif portable comprend en outre :
une troisième couche d'isolation magnétique (32) formée sur le couvercle inférieur (34).

10. Dispositif portable selon la revendication 1, où le dispositif portable comprend en outre :
un élément d'affichage de l'heure (18) disposé dans l'espace de logement (36).

11. Dispositif portable selon la revendication 10, où l'élément d'affichage de l'heure (18) comprend des échelles physiques (180) et au moins un indicateur physique (38) disposé au-dessus des échelles physiques (180).

12. Procédé pour faire fonctionner un dispositif portable, le dispositif portable comprenant un couvercle, ayant au moins une paroi (101), qui définit un espace de logement (36), le dispositif portable comprenant en outre un film conducteur (12') disposé sur une surface de la paroi (101) du couvercle, et un module de communication à courte distance (20), une unité de détection tactile (266), et un contrôleur (260) qui sont disposés dans l'espace de logement (36), le film conducteur (12') comprenant une pluralité de fils conducteurs (1211) qui sont entrelacés les uns avec les autres pour construire une pluralité d'unités conductrices (1212), le module de communication à courte distance (20) comprenant une bobine (204) et un activateur (202) connecté électriquement à la bobine (204), l'unité de détection tactile (266) connectée électriquement au film conducteur (12'), le contrôleur (260) connecté électriquement à l'unité de détection tactile (266) et au module de communication à courte distance (20), le film conducteur (12') comprenant une partie de détection (122) qui est divisée en une première zone (1220) et une seconde zone (1222) qui sont électriquement déconnectées l'une de l'autre, le procédé comprenant :
l'utilisation de l'activateur (202) du module de communication à courte distance (20) pour appliquer un courant électrique variant avec le temps, à la bobine (204), pour amener la bobine (204) à générer des signaux électromagnétiques pour une communication avec un dispositif externe ;
l'utilisation de l'unité de détection tactile (266) pour détecter un effet intégral de changements de signal électrique de toutes les unités conductrices (1212) dans le film conducteur (12') pour générer un signal de détection, l'effet intégral apporté par la totalité ou une partie efficace quelconque des unités conductrices (1212) ;
selon le signal de détection généré par l'unité de détection tactile (266), l'utilisation du contrôleur (260) pour commander ou ajuster les signaux électromagnétiques générés par la bobine (204) du module de communication à courte distance (20) ;
la transmission par la partie de détection (122) dans la première zone (1220) et la partie de détection (122) dans la seconde zone (1222) de changements de signal à l'unité de détection tactile (266) ;
la commande par le contrôleur (260), du module de communication à courte distance (20) pour permettre la transmission des signaux électromagnétiques en réponse à un toucher sur la première zone (1220) ; et
la commande par le contrôleur (260), du module de communication à courte distance (20) pour désactiver la transmission des signaux électromagnétiques en réponse à un toucher sur la seconde zone (1222).

13. Méthode selon la revendication 12, comprenant en outre :
l'utilisation du contrôleur (260) pour activer ou désactiver une boucle de circuit formée par la bobine (204) du module de communication à courte distance (20) après réception du signal de détection généré par l'unité de détection tactile (266).
